# FASCICULE DE BREVET EUROPEEN

(11) **EP 1 123 220 B1**
(45) Date de publication et mention de la délivrance du brevet: **24.01.2007**
(21) Numéro de dépôt: 00956576.3
(22) Date de dépôt: 31.07.2000
(51) Int. Cl.: B60J 7/06

(54) **MODULE DE RECOUVREMENT AMOVIBLE D'UN HABITACLE DE VEHICULE AUTOMOBILE ET UN VEHICULE AUTOMOBILE EQUIPE D'UN TEL MODULE**
ABNEHMBARES DACHMODUL FÜR EINEN KRAFTFAHRZEUG-FAHRGASTRAUM UND MIT SOLCHEM MODUL AUSGERÜSTETES KRAFTFAHRZEUG
REMOVABLE COVERING MODULE FOR A PASSENGER COMPARTMENT OF A MOTOR VEHICLE AND A MOTOR VEHICLE EQUIPPED WITH A MODULE OF THIS TYPE

(30) Priorité: 24.08.1999 FR 9910714; 24.08.1999 FR 9910716
(43) Date de publication de la demande: 16.08.2001
(73) Titulaire: Peugeot Citroen Automobiles SA, 92200 Neuilly sur Seine (FR)
(72) Inventeur: DEVAUX, Daniel, F-77183 Croissy Beaubourg (FR); CLEMENT, Daniel, F-78170 La Celle St Cloud (FR)
(74) Mandataire: De Cuenca, Emmanuel Jaime
(86) Numéro de dépôt international: PCT/FR2000/002198
(87) Numéro de publication internationale: WO 2001/014157

(56) Documents cités:
- EP-A- 0 353 695
- EP-A- 0 491 158
- DE-A- 3 942 746
- DE-A- 4 327 729
- DE-A- 19 604 855
- DE-A- 19 616 972
- DE-A- 19 737 259
- FR-A- 620 320

## Description

Elle se rapporte plus particulièrement à un module de recouvrement pour véhicule permettant de transformer une berline en un véhicule entièrement découvrable ou en cabriolet.

Quelques définitions sont rappelées ci-après. Une berline est un véhicule automobile à carrosserie fermée avec deux ou quatre portes latérales, offrant au moins quatre places. Un cabriolet est un véhicule automobile équipé d'un pare-brise fixe et d'un toit généralement en toile amovible sans encadrement supérieur de porte, dérivé le plus souvent d'une berline.

On connaît déjà des véhicules du type berline équipés d'un toit rigide escamotable et apte à être rangé (ou plié) dans une partie du coffre de manière manuelle ou électrique pour fermer et ouvrir l'habitacle du véhicule selon les conditions climatiques extérieures. Ce type de toit s'avère coûteux et occupe beaucoup de place dans le coffre en position repliée.

On connaît de DE 196 04 855 et DE 39 42 746 des véhicules du type berline équipés d'un toit escamotable. De tels véhicules comprennent un module de recouvrement d'un habitacle délimité par une pièce sensiblement en forme d'anneau, fixée à demeure sur la structure du véhicule, et sur laquelle est respectivement montée, de manière directe et indirecte, au moins une ridelle supportant une cassette formant « lunette arrière ». Ce type de module de recouvrement ne permet pas de modifier l'aspect d'un véhicule de la configuration berline en véhicule cabriolet.

L'invention a pour but de proposer un dispositif simple à mettre en oeuvre et permettant de modifier très rapidement l'aspect d'un véhicule, de la configuration berline en véhicule découvrable ou en cabriolet et inversement.

A cet effet l'invention a pour objet un module de recouvrement amovible d'un habitacle de véhicule automobile, caractérisé en ce qu'il comporte au moins une ridelle de pavillon constituée d'une pièce sensiblement en forme d'arceau fixée à chaque côté latéral du véhicule la structure du véhicule, chacune des ridelles supportant une cassette formant « lunette arrière » du véhicule et un dispositif de toit souple susceptible de coulisser entre deux positions extrêmes respectivement une position repliée sur la cassette et une position dépliée adaptée pour recouvrir l'habitacle du véhicule.

Selon une première variante de l'invention :
- la cassette comporte des verrous destinés à solidariser la cassette avec les ridelles et des moyens de guidage adaptés pour relier la cassette à la structure du véhicule, destinés à permettre le démontage de cette dernière et son rangement dans un logement réalisé dans le coffre du véhicule lorsque le dispositif de toit est en position extrême repliée sur la cassette;
- les moyens de guidage sont constitués pour chaque glissière d'un rail dont l'extrémité de la partie inférieure de la glissière est engagée dans ledit rail en position cassette verrouillée sur la ridelle et dont la partie inférieure du rail est articulée autour d'un axe transversal qui est fixé au fond du logement ;
- la partie supérieure de chacun des rails comporte un loquet de verrouillage qui coopère avec un orifice réalisé sur les côtés de caisse (S) en position cassette verrouillée ;
- le dispositif de toit est pourvu d'un mécanisme d'entraînement permettant de déplacer le toit en toile agencé sur la cassette ;
- le mécanisme d'entraînement comporte un moteur électrique enroulant ou déroulant un fil coulissant dans les glissières et les profilés relié aux chariots du dispositif de toit;
- la cassette est munie de moyens d'indexage assurant l'alignement longitudinal entre les profilés des ridelles de pavillon et les glissières de la cassette.

Selon une deuxième variante de l'invention :
- la cassette est apte à être démontée et rangée dans le véhicule dans la position extrême correspondant au dispositif de toit souple replié sur celle-ci ;
- la cassette comporte des verrous destinés à solidariser la cassette avec les ridelles et des moyens de guidage reliant la cassette à un hayon articulé dans sa partie basse autour d'un axe transversal destinés à permettre le démontage de cette dernière et son rangement dans un logement réalisé dans ledit hayon du véhicule ;
- les moyens de guidage sont constitués pour chaque glissière d'un rail dont l'extrémité de la partie inférieure de la glissière est engagée dans ledit rail en position cassette verrouillé sur la ridelle et dont chaque rail est solidaire d'une paroi latérale du hayon ;
- le hayon comporte une peau extérieure qui est articulée dans sa partie basse autour de l'axe d'articulation du hayon et en ce que ladite peau obstrue un logement former dans le hayon.

Suivant d'autres caractéristiques de l'invention :
- la cassette est composée de deux glissières reliées entre elles par deux traverses situées à chaque extrémité des glissières;
- le dispositif de toit est constitué d'un toit en toile souple à l'intérieur duquel est agencée une pluralité de baleines disposées transversalement par rapport au véhicule, parallèles et équidistantes les unes des autres en position toit déplié, chacune de ses baleines étant munie à ses extrémités libres d'un chariot qui est apte à coulisser longitudinalement dans un profilé réalisé sur chacune des ridelles et dans une glissière disposée de part et d'autre de la cassette prolongeant longitudinalement les profilés.

L'invention concerne également un véhicule automobile comportant un module de recouvrement tel que mentionné ci-dessus.

Selon la première variante de l'invention :
- le véhicule comporte un logement réalisé dans le plancher situé dans Le compartiment du coffre et dans lequel la cassette vient se ranger;
- le logement est recouvert par un plancher monté sur des glissières longitudinales.

Selon d'autres caractéristiques de l'invention :
- chacune des ridelles de pavillon est susceptible d'être démontée et est pourvue à l'une de ses extrémités libres d'un mécanisme de fixation avec la structure du véhicule et d'un moyen d'indexage de chaque ridelle avec la structure ;
- chacune des ridelles est montée fixement sur la caisse et articulée dans sa partie médiane suivant un axe sensiblement vertical permettant par pivotement, rapprochement et verrouillage des parties amonts de chacune des ridelles l'une à l'autre la formation d'un arceau de sécurité en cas de retournement.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective d'un véhicule équipé d'un module de recouvrement de l'habitacle selon la présente invention en configuration « berline »;
- les figures 2 et 3 sont des vues analogues à la figure 1 représentant respectivement le véhicule en configuration «découvrabilité partielle» ;

selon une première variante de l'invention,
- les figures 4 et 5 sont des vues de côté du toit replié sur l'arrière du véhicule, illustrant respectivement le démontage et le rangement de la cassette dans le fond du coffre ;
- les figures 6 à 8 sont des vues en perspectives illustrant respectivement les différentes étapes de rangement de la cassette dans le coffre ;
- la figure 9 est une vue de détails à plus grande échelle de la partie cerclée A de la figure 4 ;
- les figures 10 et 11 sont des vues à plus grande échelle respectivement selon la ligne VI-VI et la ligne VII-VII de la figure 9 ;
- la figure 12 est une vue de face suivant la flèche F de la figure 4 ;
- la figure 13 est une vue de détails à plus grande échelle selon la ligne Y-Y de la figure 12 ;
selon une deuxième variante de l'invention :
- la figure 14 est une vue de côté du toit replié sur l'arrière du véhicule tel que représenté sur la figure 3, illustrant respectivement le démontage et le rangement de la cassette dans le hayon arrière du véhicule ;
- la figure 15 est une vue de détails à plus grande échelle selon la ligne V-V de la figure 14 ;
- la figure 16 est une vue analogue à la figure 3 illustrant le véhicule en configuration cassette et toit rangés dans le hayon arrière ;
- la figure 17 est une vue à plus grande échelle de la partie cerclée A de la figure 14 ;
- la figure 18 est une vue de détails à plus grande échelle selon la ligne VI-VI de la figure 17 ;
- la figure 19 est une vue analogue à la figure 1 en configuration « cabriolet ».

Dans la suite de la description les .termes «avant» ou «arrière», sont à considérer par rapport à l'avant ou à l'arrière du véhicule.

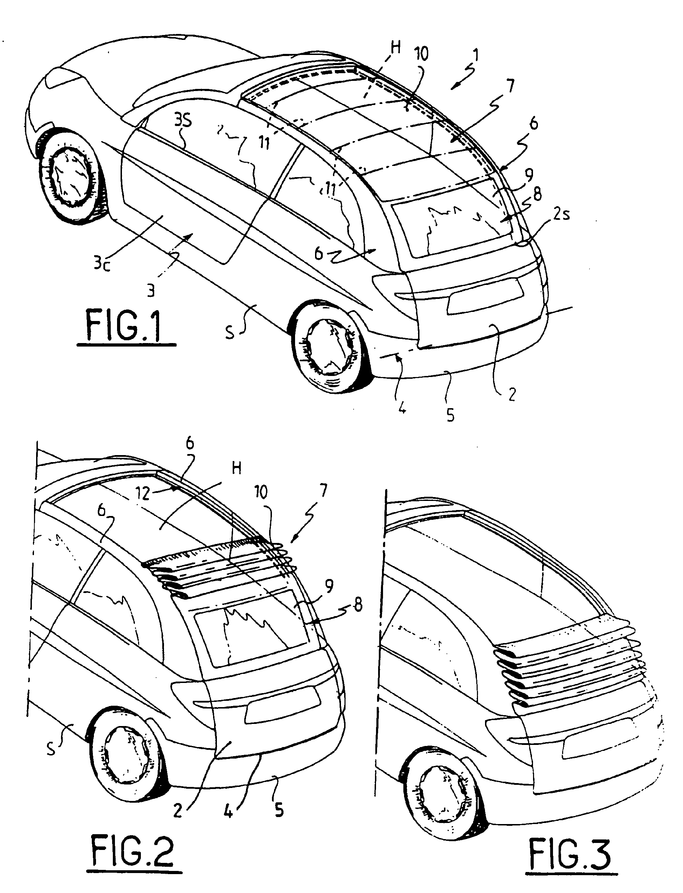

On a représenté sur les figures 1 à 3, un véhicule automobile en configuration berline équipé d'un module 1 de recouvrement amovible de l'habitacle H, d'un hayon 2 arrière et d'au moins une porte latérale 3 pour chaque côte du véhicule de telle sorte que l'accès à l'habitacle H du véhicule automobile soit facilité.

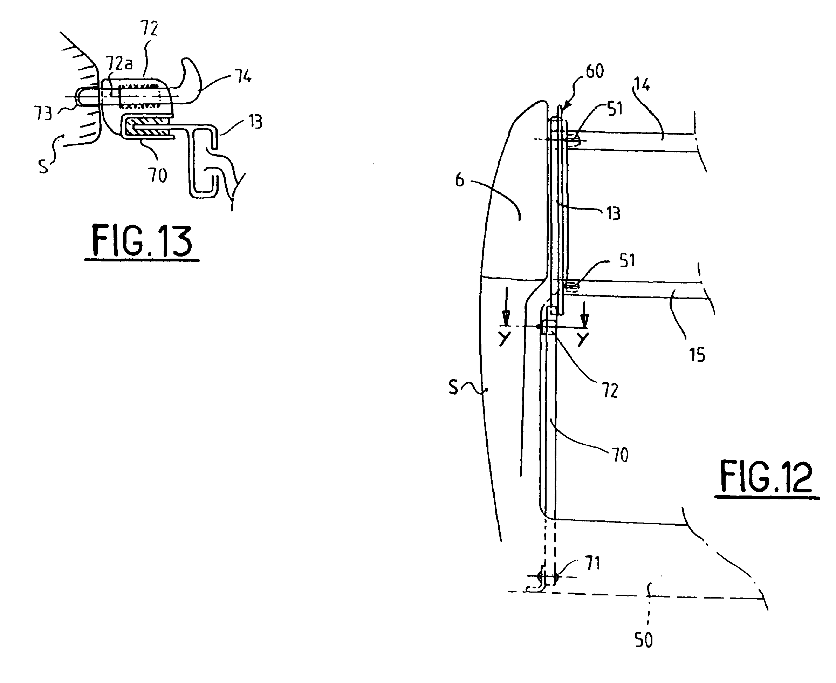

De façon avantageuse, on notera que la partie supérieure 2S du hayon 2 est sensiblement située dans le même plan que la partie supérieure 3S du caisson 3c de chaque porte 3 comme visible aux figures 1 à 3, permettant ainsi d'avoir un véhicule en configuration cabriolet (Figure 13) lorsque le module 1 de recouvrement de l'habitacle est complètement retiré.

Selon une première variante de l'invention, le hayon 2 est articulé dans sa partie basse autour d'un axe transversal 4 par rapport au véhicule fixé sur la structure arrière de ce dernier au voisinage du pare-chocs arrière 5.

Ce hayon 2 est susceptible de pivoter autour de l'axe 4 transversal entre deux positions extrêmes respectivement une position fermée (Figure 1) et une position ouverte (Figure 13) afin de permettre l'accès à l'habitacle du véhicule et notamment au coffre.

Le module 1 de recouvrement de l'habitacle comporte pour chaque côte latérale du véhicule une ridelle 6 de pavillon amovible constitué d'une pièce sensiblement verticale en forme d'arceau destiné à être fixée à la structure S du véhicule par l'intermédiaire de ses extrémités libres de manière à supporter un dispositif de toit 7 souple découvrable et amovible apte à être rangé à l'intérieur du véhicule selon l'invention, formant pavillon de toit en position dépliée, comme représenté sur la Figure 1, recouvrant ainsi ledit véhicule.

Le module 1 de recouvrement de l'habitacle comporte en outre une cassette 8 amovible située au droit du hayon 2 arrière et fixée également sur les ridelles 6 de pavillon formant ainsi une lunette arrière pour le véhicule en configuration berline comme visible sur la figure 1. On comprend aisément qu'une toile translucide ou un verre 9 est fixé(e) sur la cassette 8 afin de fermer l'habitacle et permettre une vision arrière pour le chauffeur.

Le dispositif de toit 7 est constitué d'un toit en toile souple 10 à l'intérieur duquel est agencé de manière connue une pluralité de baleines 11 disposées transversalement par rapport au véhicule, parallèles et équidistantes les unes des autres en position toit déplié (figure 1). Chacune de ses baleines est munie à ses extrémités libres d'un chariot, non représenté, mobile longitudinalement dans un profilé 12 réalisé sur chacune des ridelles 6 et situé dans la partie de la ridelle 6 sensiblement horizontale.

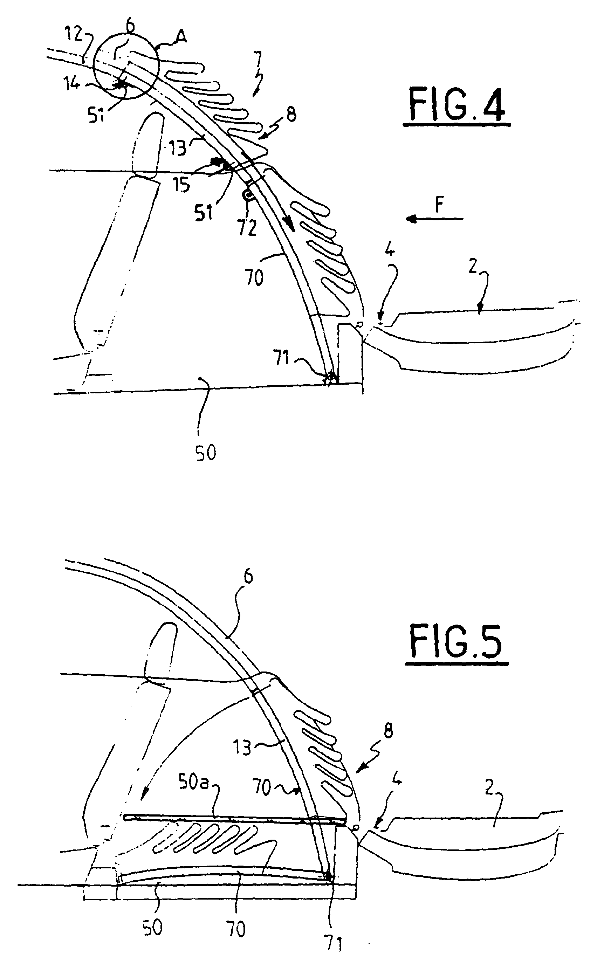

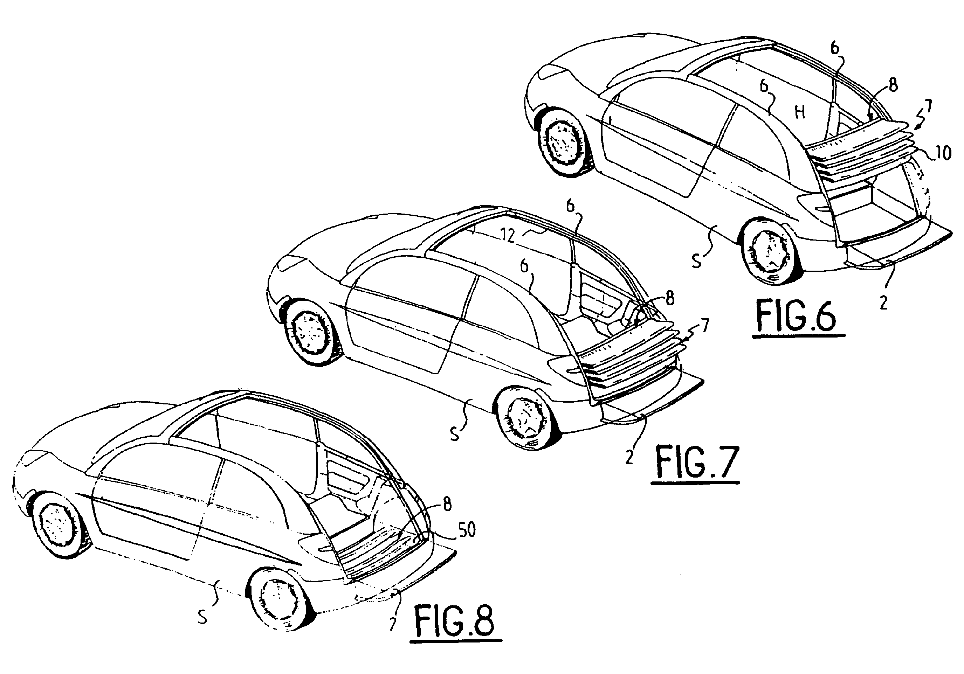

Avantageusement, la cassette 8 est composée de deux glissières 13 reliées entre elles par deux traverses 14 et 15 situées à chaque extrémité des glissières 13, comme visible sur la figure 4. Chacune des glissières 13 de la cassette 8 prolonge longitudinalement les profilés 12 de chacune des ridelles 6 de pavillon de manière à permettre aux chariots de chaque baleine 11 leurs déplacement longitudinal sur cette cassette 8, et ainsi obtenir une découvrabilité totale de l'habitacle du véhicule, comme représenté à la Figure 6.

Chaque chariot est déplacé longitudinalement dans le profilé 12 et la glissière 13 soit de manière manuelle par l'utilisateur en déplaçant l'extrémité avant du toit toile vers l'arrière, soit de manière électrique par l'intermédiaire par exemple d'un fil, non représenté, relié au chariot d'extrémité, guidé dans le profilé 12 et la glissière 13 et entraîné dans un déplacement longitudinal par l'intermédiaire d'un moteur électrique commandé par un interrupteur situé par exemple au poste de commande, enroulant ou déroulant ledit fil selon la manoeuvre désirée par l'utilisateur, ouverture ou fermeture du toit. On notera que dans la variante électrique, non représentée en détail, le moteur électrique est avantageusement situé dans la partie inférieure médiane de la cassette 8.

On décrira maintenant plus en détail la fixation de la cassette, en relation avec les figures 4 à 13.

De manière à assurer le montage et le démontage de la cassette 8, celle-ci est munie de quatre verrous 51 respectivement disposés sensiblement à chaque extrémité des glissières 13 destiné à solidariser ladite cassette 8 avec les ridelles 6 de pavillon.

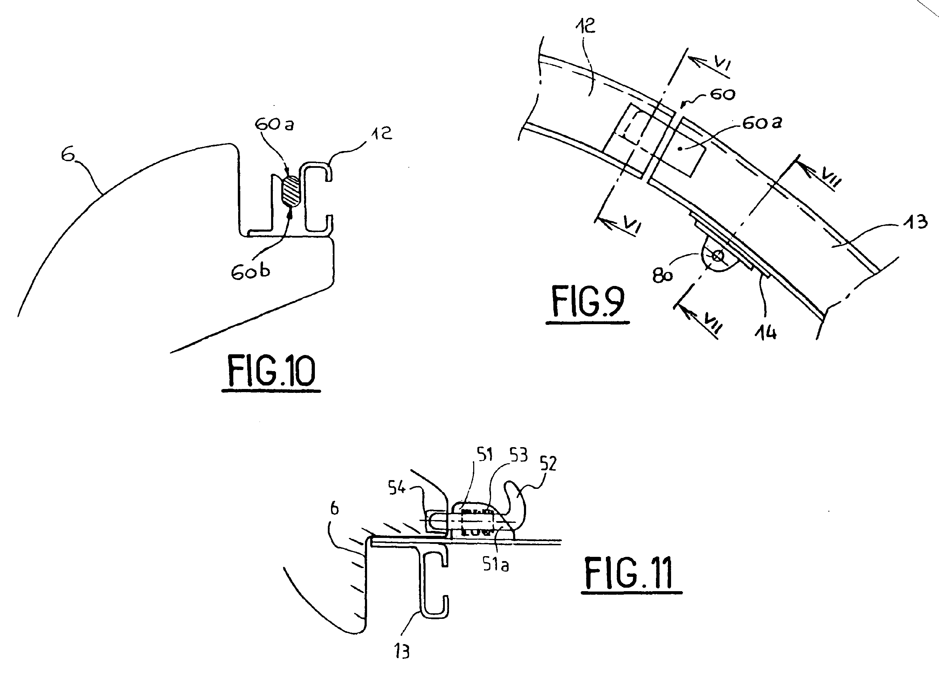

Chacun de ces verrous 51 est constitué d'un loquet 51a transversal pourvu d'une partie de préhension 52 et d'un ressort de rappel 53 monté coaxial au loquet 51a, comme représenté en détail à la figure 10. Chacun des loquets 51a sont destinés à s'engager dans un orifice 54 réalisé dans la paroi latérale de la ridelle 6.

La cassette 8 est en outre pourvue d'un moyen d'indexage 60 situé à l'extrémité supérieure de chacune des glissières 13 afin de permettre un alignement entre les profilés 12 des ridelles 6 et les glissières 13 de la cassette 8. Ce moyen d'indexage 60 est constitué d'une broche 60a qui coopère avec un logement 60b réalisé dans le fond des profilés 12, comme visible aux figures 10 et 11.

L'extrémité inférieure de chacune des glissières 13 est engagée dans un rail 70, formant un moyen de guidage pour le rangement de la cassette, disposé sensiblement verticalement en position cassette 8 verrouillée sur les ridelles 6, comme illustré sur la figure 13.

Chacun des rails 70 est muni à sa partie inférieure en considérant la figure 11 d'un axe d'articulation transversale 71 qui est fixé au fond d'un Logement 50 réalisé dans le faux plancher du coffre et situé dans la partie arrière de celui-ci. La partie supérieure de chacun des rails 70 comporte un loquet 72 de verrouillage qui est constitué d'un axe 72a transversal qui coopère avec un orifice 73 réalisé sur les côtés de caisse S en position cassette 8 verrouillée et d'une partie de préhension 74 destiné à déverrouiller ledit loquet 72 (figure 13).

Le montage et le rangement de la cassette dans le véhicule afin de transformer celui-ci d'une configuration berline à une configuration véhicule entièrement "découvrable" tel qu'illustre aux figures 4 à 8 va maintenant être décrit.

L'utilisateur entraîne manuellement ou de manière électrique par l'action d'un bouton, le repliement du toit en toile 10 vers l'arrière du véhicule, ce qui entraîne le déplacement de chaque chariot des baleines 11 dans les profilés 12. Le coulissement longitudinal des chariots est ensuite suivant les désirs de l'utilisateur prolongé sur les glissières 13 de la cassette 8 de telle sorte à obtenir une configuration où le toit toile 10 est entièrement replié sur la cassette (Fig. 6).

Dans une telle situation, l'utilisateur doit ouvrir le hayon 2 arrière puis déverrouiller chaque verrou 51 de la cassette 8 afin de permettre à cette dernière de glisser sur les rails 70.

Il suffit alors à l'utilisateur de déverrouiller les loquets 72 de chaque rail 70 afin d'amener la cassette 8 dans une position horizontale par pivotement autour des axes d'articulation 71 des rails 70, de telle sorte que la cassette 8 se retrouve immobilisée dans son logement 50.

On notera que préalablement, le logement 50 doit être découvert en déplaçant le plancher 50a du coffre vers l'arrière, ce dernier étant monté sur des glissières horizontales, non représenté, solidaire des côtés de caisse S.

Une fois la cassette 8 et le toit 10 disposé dans le logement 50, l'utilisateur peut inversement déplacer le plancher 50a afin de cacher ces derniers et fermer alors le hayon 2, comme illustré sur la figure 5.

Le montage de la cassette 8 s'effectue de manière tout aussi aisé en effectuant à l'inverse les opérations décrites ci-dessus.

Selon une variante de réalisation de la présente invention, non illustrée, la cassette est composée de deux brancards reliés par une traverse en partie supérieure sur lesquels sont articulées dans leurs parties supérieures autour d'un axe transversal deux glissières reliées ensembles en partie inférieure par une traverse. Une vitre en verre est solidarisée aux glissières articulées dans leur partie supérieure autour de l'axe permettant ainsi un accès aisé au coffre sans ouvrir le hayon.

De façon similaire à la première variante de réalisation décrite ci-dessus, chacune des glissières de la cassette prolonge longitudinalement les profilés de chacune des ridelles de pavillon de manière à permettre aux chariots de chaque baleine leurs déplacements longitudinaux sur cette cassette et ainsi obtenir une découvrabilité totale de l'habitacle du véhicule.

Selon une deuxième variante illustrée de l'invention, le hayon 2 est articulé dans sa partie basse autour d'un axe transversal 4 par rapport au véhicule fixé sur la structure arrière de ce dernier au voisinage du pare-chocs arrière 5.

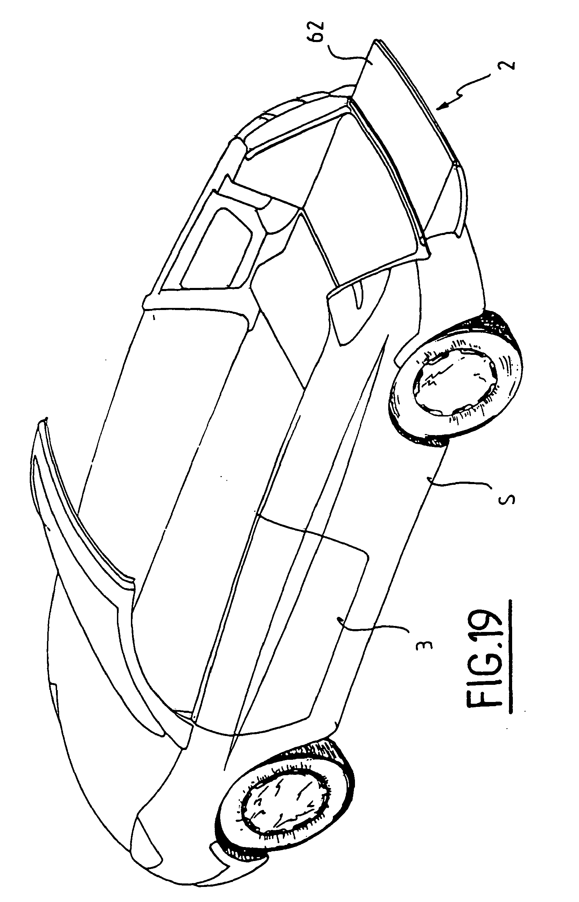

Ce hayon 2 est susceptible de pivoter autour de l'axe 4 transversal entre deux positions extrêmes respectivement une position fermée (Figure 1) et une position ouverte (Figure 19) afin de permettre l'accès à l'habitacle du véhicule et notamment au coffre.

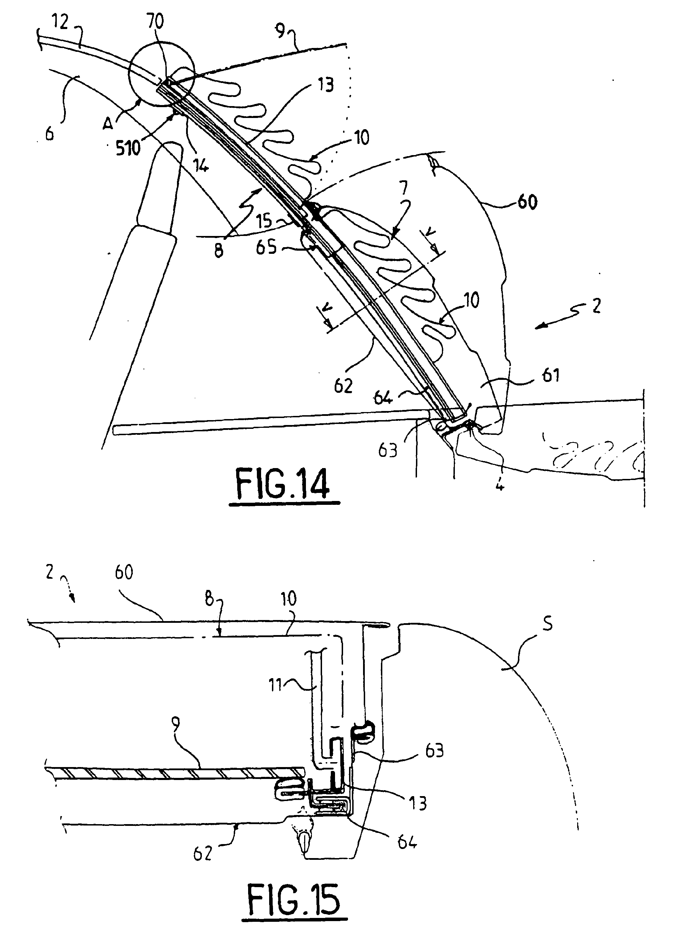

On décrira maintenant plus en détail la fixation de la cassette, en relation avec les figures 14 à 19.

De manière à assurer le montage et le démontage de la cassette 8, celle-ci est munie d'au moins deux verrous 510 respectivement disposés sensiblement à chaque extrémité supérieure des glissières 13 destiné à solidariser ladite cassette 8 avec les ridelles 6 de pavillon.

Chacun de ces verrous 510 est constitué d'un loquet 520 transversal et d'un ressort de rappel, non représenté, monté coaxial au loquet 520, comme représenté en détail à la figure 8. Chacun des loquets 520 est destiné à s'engager dans un orifice 530 réalisé dans la paroi latérale de la ridelle 6.

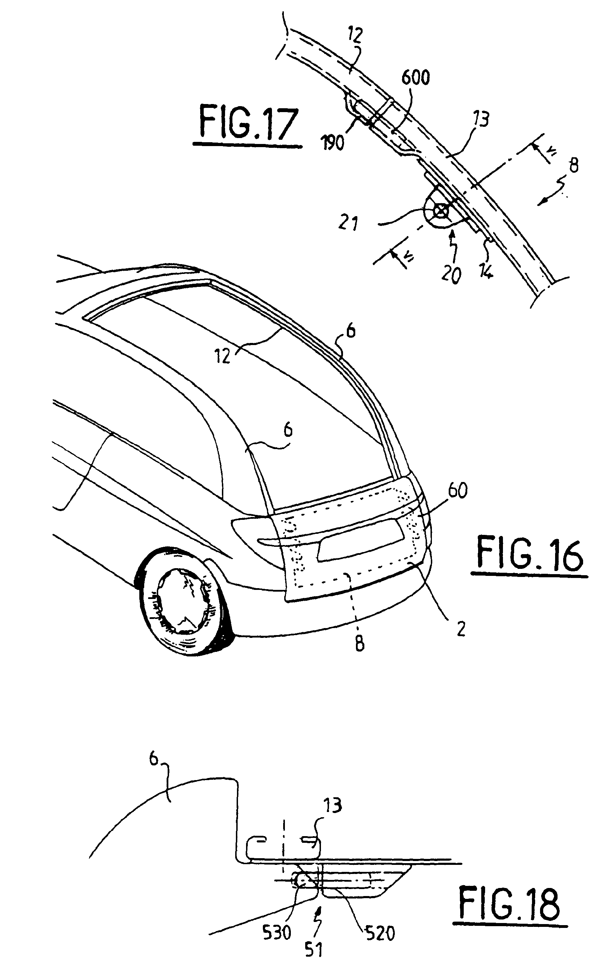

La cassette 8 est en outre pourvue d'un moyen d'indexage 17 situé à l'extrémité supérieure de chacune des glissières 13 afin de permettre un alignement entre les profilés des ridelles 6 et les glissières 13 de la cassette 8. Ce moyen d'indexage 17 est constitué d'une broche qui coopère avec un logement 19 réalisé dans le fond des profilés 12, comme visible à la figure 17.

La cassette 8 pourvue du toit en toile 10 souple replié est apte à être démontée comme mentionné ci-dessus et à être rangée à l'intérieur du hayon 2 arrière, tel que représenté à la figure 16.

A cet effet, le hayon 2 est muni d'une peau extérieure 60 qui est articulée dans sa partie basse autour d'un axe 4 transversal correspondant avantageusement à l'axe d'articulation du hayon 2, destinée à obstruer un évidement 61 formé par la paroi interne 62 du hayon 2 et les parois latérales 63 de celui-ci.

Chacune des parois latérales 63 de l'évidement 61 est munie d'un rail 64, formant moyen de guidage, disposé sensiblement verticalement en position hayon 2 fermé destiné à coopérer avec une partie saillante 65 des glissières 13, comme visible sur la figure 4, formant coulisseau en position ouverture de la peau extérieure 60 du hayon 2.

Le montage et le rangement de la cassette 8 dans le véhicule afin de transformer celui-ci d'une configuration berline à une configuration véhicule entièrement "découvrable" tel qu'illustré à la figure 16 va maintenant être décrit.

L'utilisateur entraîne manuellement ou de manière électrique par l'action d'un bouton, le repliement du toit en toile 10 vers l'arrière du véhicule, ce qui entraîne le déplacement de chaque chariot des baleines 11 dans les profilés 12. Le coulissement longitudinal des chariots est ensuite suivant les désirs de l'utilisateur prolongé sur les glissières 13 de la cassette 8 de telle sorte à obtenir une configuration où le toit toile 10 est entièrement replié sur la cassette (Fig. 3).

Dans une telle situation, l'utilisateur doit ouvrir la peau extérieure 60 du hayon 2 puis déverrouiller chaque verrou 510 de la cassette 8 de manière à permettre à chacune des glissières 13 de coulisser dans chacun des rails 64 afin de faire coulisser la cassette 8 pourvue du toit 10 à l'intérieur du hayon .

La peau extérieure 60 est alors refermée, de telle sorte à obtenir un véhicule ayant l'aspect véhicule entièrement découvrable (figure 16).

Le montage de la cassette 8 s'effectue de manière tout aussi aisé en effectuant à l'inverse les opérations décrites ci-dessus.

Selon une autre caractéristique de l' invention, la cassette 8 comporte une vitre 9 en verre qui est solidarisée aux glissières 13 et articulée dans leur partie supérieure autour d'un axe 70 permettant ainsi un accès aisé au coffre sans ouvrir le hayon 2.Une fois la cassette 8 démontée et rangée dans le véhicule, chacune des ridelles 6 de pavillon est susceptible d'être démontée afin de transformer le véhicule en configuration cabriolet (Figure 13).

A cet effet, chacune des ridelles est pourvue au moins à l'une de ses extrémités libre d'un mécanisme de fixation avec la structure du véhicule et d'un moyen d'indexage de chaque ridelle avec la structure.

On notera par exemple que le mécanisme de fixation est constitué d'un système classique de verrouillage avec l'un des montants du pare-brise du type à grenouillère.

Le mécanisme de fixation et le moyen d'indexage de chaque ridelle ne seront pas décrits plus en détail dans la suite de la description.

Chacune des ridelles 6 est ainsi apte a être démontée du véhicule pour être stockée dans un endroit clos, par exemple un garage.

On comprend aisément à la lecture de la description ci-dessus de l'invention des différents modes de réalisation et que le module 1 de recouvrement selon la présente invention permet avantageusement de métamorphoser de manière simple et rapide l'aspect d'une berline à une configuration véhicule découvrable puis éventuellement en un cabriolet.

Bien entendu, l'invention n'est pas limitée aux modes de réalisation qui ont été décrits ; on pourrait au contraire concevoir diverses variantes sans sortir du cadre de l'invention. C'est ainsi par exemple, que chacune des ridelles 6 peut être montée fixement sur la caisse et articulée dans sa partie médiane suivant un axe sensiblement vertical afin de permettre par pivotement, rapprochement et verrouillage des parties amonts de chacune des ridelles l'une à l'autre de manière à former un arceau de sécurité en cas de retournement, pour la configuration cabriolet.

## Revendications

1. Module de recouvrement amovible d'un habitacle de véhicule automobile, comportant au moins une ridelle (6) de pavillon constitué d'une pièce sensiblement en forme d'arceau fixée à chaque côté latéral de la structure du véhicule, chacune des ridelles (6) supportant une cassette amovible (8) formant « lunette arrière » du véhicule et un dispositif de toit souple susceptible de coulisser entre deux positions extrêmes respectivement une position repliée sur la cassette (8) et une position dépliée adaptée pour recouvrir l'habitacle du véhicule. **caractérisé en ce que** la cassette est montée de façon amovible sur lesdites ridelles pour pouvoir en être démontée.

2. Module selon la revendication 1, **caractérisé en ce que** la cassette (8) comporte des verrous (51) destinés à solidariser la cassette (8) avec les ridelles (6) et des moyens de guidage (70) adaptés pour relier la cassette (8) à la structure du véhicule destinés à permettre le démontage de cette dernière et son rangement dans un logement (50) réalisé dans le coffre du véhicule, lorsque le dispositif de toit est en position extrême repliée sur la cassette (8).

3. Module selon la revendication 2, **caractérisé en ce que** les moyens de guidage (70) sont constitués pour chaque glissière (13) d'un rail (70) dont l'extrémité de la partie inférieure de la glissière (13) est engagée dans ledit rail en position cassette (8) verrouillé sur la ridelle (6) et dont la partie inférieure du rail est articulée autour d'un axe transversal (71) qui est fixé au fond du logement (50).

4. Module selon la revendication 3, **caractérisé en ce que** la partie supérieure de chacun des rails (70) comporte un loquet de verrouillage (72) qui coopère avec un orifice (73) réalisé sur les côtés de caisse (S) en position cassette (8) verrouillé.

5. Module selon l'une quelconque des revendications précédentes, **caractérisé en ce que** le dispositif de toit (7) est pourvu d'un mécanisme d'entraînement permettant de déplacer le toit en toile (10) agencé sur la cassette (8).

6. Module selon la revendication 5, **caractérisé en ce que** le mécanisme d'entraînement comporte un moteur électrique enroulant ou déroulant un fil coulissant dans les glissières (13) et les profilés (12) relié aux chariots du dispositif de toit.

7. Module selon l'une quelconque des revendications 4 à 6, **caractérisé en ce que** la cassette (8) est munie de moyens d'indexage (60) assurant l'alignement longitudinal entre les profilés (12) des ridelles de pavillon (6) et les glissières (13) de la cassette (8).

8. Module selon la revendication 1, **caractérisé en ce que** la cassette (8) est apte à être démontée et rangée dans le véhicule dans la position extrême correspondant au dispositif de toit souple (7) replié sur celle-ci.

9. Module selon la revendication 8, **caractérisé en ce que** la cassette comporte des verrous destinés à solidariser la cassette avec les ridelles et des moyens de guidage reliant la cassette à un hayon articulé dans sa partie basse autour d'un axe transversal destinés à permettre le démontage de cette dernière et son rangement dans un logement réalisé dans ledit hayon du véhicule

10. Module selon la revendication 9, **caractérisé en ce que** les moyens de guidage sont constitués d'un rail dans lequel est engagée une glissière (13) de la cassette (8) en position verrouillée sur la ridelle (6), chaque rail étant solidaire d'une paroi latérale du hayon.

11. Module selon la revendication 9 ou 10, **caractérisé en ce que** le hayon comporte une paroi interne (62), des parois latérales (63) et une peau extérieure (60), lesdites parois interne et latérales formant un évidement (61) qui est obstrué par ladite peau extérieure articulée dans sa partie basse autour d'un axe (4) correspondant à un axe d'articulation du hayon.

12. Module selon l'une quelconque des revendications précédentes, **caractérisé en ce que** le dispositif de toit (7) est constitué d'un toit en toile souple (10) à l'intérieur duquel est agencée une pluralité de baleines (11) disposées transversalement par rapport au véhicule, parallèles et équidistantes les unes des autres en position toit déplié, chacune de ses baleines étant munie à ses extrémités libres d'un chariot qui est apte à coulisser longitudinalement dans un profilé (12) réalisé sur chacune des ridelles (6) et dans une glissière (13) disposée de part et d'autre de la cassette (8) prolongeant longitudinalement les profilés (12).

13. Module selon l'une quelconque des revendications précédentes, **caractérisé en ce que** la cassette (8) est composée de deux glissières (13) reliées entre elles par deux traverses (14,15) situées à chaque extrémité des glissières (13).

14. Véhicule automobile comportant un module de recouvrement conforme à l'une quelconque des revendications précédentes.

15. Véhicule selon la revendication 14, **caractérisé en ce que** la cassette (8) est apte à être rangée dans un logement (50) réalisé dans le plancher du véhicule situé dans le compartiment du coffre.

16. Véhicule selon la revendication 15, **caractérisé en ce que** un plancher (50a) du coffre est monté sur des glissières horizontales de sorte à rendre apte l'obturation du logement (50).

17. Véhicule selon l'une des revendications 14 à 16, **caractérisé en ce que** chacune des ridelles (6) de pavillon est susceptible d'être démontée et est pourvue à l'une de ses extrémités libres d'un mécanisme de fixation avec la structure du véhicule et d'un moyen d'indexage de chaque ridelle avec la structure.

18. Véhicule selon l'une quelconque des revendications 14 à 16, **caractérisé en ce que** chacune des ridelles (6) est montée fixement sur la caisse et **en ce que** chacune des ridelles comprend une partie amont articulée en une partie médiane de la ridelle, les ridelles formant un arceau de sécurité en cas de retournement du véhicule.

## Claims

1. Removable covering module for a passenger compartment of a motor vehicle, comprising at least one roof panel (6) constituted by a substantially bow-shaped part fixed to each lateral side of the structure of the vehicle, each of the panels (6) supporting a removable cassette (8) forming the "rear window" of the vehicle and a flexible roof device capable of sliding between two outermost positions, respectively a position in which it is folded over the cassette (8) and an unfolded position adapted to cover the passenger compartment of the vehicle, **characterised in that** the cassette is mounted on said panels in a removable manner so that it can be dismantled therefrom.

2. Module according to Claim 1, **characterised in that** the cassette (8) comprises bolts (51) intended to make the cassette (8) integral with the panels (6) and guidance means (70) adapted to connect the cassette (8) to the structure of the vehicle intended to allow the latter to be dismantled and put away in a housing (50) made in the boot of the vehicle, when the roof device is in the outermost position folded back over the cassette (8).

3. Module according to Claim 2, **characterised in that** the guidance means (70) are constituted, for each runner (13), by a rail (70) whereby the end of the lower part of the runner (13) is engaged in said rail in the position in which the cassette (8) is locked on to the panel (6) and whereby the lower part of the rail is articulated around a transverse axis (71) that is fixed to the bottom of the housing (50).

4. Module according to Claim 3, **characterised in that** the upper part of each of the rails (70) comprises a locking latch (72) which co-operates with an opening (73) made in the sides of the bodywork (S) in the position (8) where the cassette is locked.

5. Module according to any one of the preceding claims, **characterised in that** the roof device (7) is equipped with a drive mechanism allowing the fabric roof (10) arranged on the cassette (8) to be displaced.

6. Module according to Claim 5, **characterised in that** the drive mechanism comprises an electric motor rolling up or unrolling a wire sliding within the runners (13) and the sections (12) connected to the carriages of the roof device.

7. Module according to any one of Claims 4 to 6, **characterised in that** the cassette (8) is provided with indexing means (60) ensuring longitudinal alignment between the sections (12) of the roof panels (6) and the runners (13) of the cassette (8).

8. Module according to Claim 1, **characterised in that** the cassette (8) is capable of being dismantled and put away in the vehicle in the outermost position in which the flexible roof device (7) is folded back over it.

9. Module according to Claim 8, **characterised in that** the cassette comprises bolts intended to make the cassette integral with the panels and guidance means connecting the cassette to a tailgate articulated in its lower part around a transverse axis intended to allow the latter to be dismantled and put away in a housing made in said tailgate of the vehicle.

10. Module according to Claim 9, **characterised in that** the guidance means are constituted by a rail in which a runner (13) of the cassette (8) is engaged in the position in which it is locked on to the panel (6), each rail being integral with a side wall of the tailgate.

11. Module according to Claim 9 or 10, **characterised in that** the tailgate comprises an internal wall (62), side walls (63) and an outer skin (60), said internal and side walls forming a recess (64) that is blocked by said outer skin articulated in its lower part around an axis (4) corresponding to an axis of articulation of the tailgate.

12. Module according to any one of the preceding claims, **characterised in that** the roof device (7) is constituted by a roof made of flexible fabric (10), inside which a plurality of ribs (11) is arranged, disposed transversely to the vehicle, parallel to and equidistant from each other in the position where the roof is unfolded, each of its ribs being provided at its free ends with a carriage that can slide longitudinally within a section (12) made on each of the panels (6) and in a runner (13) arranged on either side of the cassette (8), longitudinally extending the sections (12).

13. Module according to any one of the preceding claims, **characterised in that** the cassette (8) is composed of two runners (13) connected to each other by two cross-pieces (14, 15) located at each end of the runners (13).

14. Motor vehicle comprising a covering module according to any one of the preceding claims.

15. Vehicle according to Claim 14, **characterised in that** the cassette (8) can be put away in a housing (50) made in the floor of the vehicle located in the boot compartment.

16. Vehicle according to Claim 15, **characterised in that** a floor (50a) of the boot is mounted on horizontal runners so as to make it possible to block off the housing (50).

17. Vehicle according to one of Claims 14 to 16, **characterised in that** each of the roof panels (6) is capable of being dismantled and is provided at one of its free ends with a mechanism for fixing it to the structure of the vehicle and with a means of indexing each panel to the structure.

18. Vehicle according to any one of Claims 14 to 16, **characterised in that** each of the panels (6) is immovably mounted on the bodywork and **in that** each of the panels comprises an upper part articulated in a middle part of the panel, the panels forming a roll-over bar in the event of the vehicle overturning.

## Patentansprüche

1. Abnehmbares Dachmodul für den Fahrgastraum eines Kraftfahrzeugs mit mindestens einem Dachträger (6) bestehend aus einem im Wesentlichen bogenförmigen Teil, das an jeder Seite des Fahrzeugaufbaus befestigt ist, wobei jeder Träger (6) eine abnehmbare Kassette (8), die ein "Heckfenster" des Fahrzeugs bildet, und eine flexible Dachvorrichtung trägt, die zwischen zwei Endpositionen beweglich ist, nämlich einer zur Kassette (8) zurückgezogenen Position und einer ausgefahrenen Position, in der sie den Fahrgastraum des Fahrzeugs bedeckt, **dadurch gekennzeichnet, dass** die Kassette abnehmbar an den Trägern montiert ist.

2. Modul nach Anspruch 1, **dadurch gekennzeichnet, dass** die Kassette (8) Riegel (51), die sie mit den Trägern (6) verbinden, und Führungsmittel (70) aufweist, die sie mit dem Fahrzeugaufbau verbinden und das Abnehmen und Verstauen der Kassette (8) in einer Aufnahme (50) im Kofferraum des Fahrzeugs ermöglichen, wenn sich die Dachvorrichtung in der zur Kassette (8) zurückgezogenen Endposition befindet.

3. Modul nach Anspruch 2, **dadurch gekennzeichnet, dass** die Führungsmittel (70) für jede Gleitbahn (13) aus einer Schiene (70) bestehen, wobei das Ende des unteren Abschnitts der Gleitbahn (13) bei am Träger (6) verriegelter Kassette (8) in die Schiene eingefügt ist und wobei der untere Abschnitt der Schiene um eine Querachse (71) angelenkt ist, die am Boden der Aufnahme (50) befestigt ist.

4. Modul nach Anspruch 3, **dadurch gekennzeichnet, dass** der obere Abschnitt jeder Schiene (70) eine Verriegelungsfalle (72) aufweist, die bei verriegelter Kassette (8) mit einer Öffnung (73) an den Seiten des Aufbaus (S) zusammenwirkt.

5. Modul nach einem der vorhergehenden Ansprüche, **dadurch gekennzeichnet, dass** die Dachvorrichtung (7) mit einem Antrieb versehen ist, der das an der Kassette (8) angeordnete Dach aus Leinen (10) bewegen kann.

6. Modul nach Anspruch 5, **dadurch gekennzeichnet, dass** der Antrieb einen Elektromotor umfasst, der einen Draht auf- oder abwickelt, welcher in den Gleitbahnen (13) und den Profilen (12) gleitet und mit den Schlitten der Dachvorrichtung verbunden ist.

7. Modul nach einem der Ansprüche 4 bis 6, **dadurch gekennzeichnet, dass** die Kassette (8) mit Anpassungsmitteln (60) versehen ist, die für die Längsausrichtung zwischen den Profilen (12) der Dachträger (6) und den Gleitbahnen (13) der Kassette (8) sorgen.

8. Modul nach Anspruch 1, **dadurch gekennzeichnet, dass** die Kassette (8) abgenommen und in der Endposition der zu ihr zurückgezogenen flexiblen Dachvorrichtung (7) im Fahrzeug verstaut werden kann.

9. Modul nach Anspruch 8, **dadurch gekennzeichnet, dass** die Kassette Riegel aufweist, die sie mit den Trägern verbinden, sowie Führungsmittel, die sie mit einer in ihrem unteren Abschnitt um eine Querachse angelenkten Heckklappe verbinden und die es ermöglichen, die Kassette abzunehmen und in einer Aufnahme in der Heckklappe des Fahrzeugs zu verstauen.

10. Modul nach Anspruch 9, **dadurch gekennzeichnet, dass** die Führungsmittel aus einer Schiene bestehen, in die eine Gleitbahn (13) der Kassette (8) in der am Träger (6) verriegelten Position eingefügt ist, wobei jede Schiene mit einer Seitenwand der Heckklappe fest verbunden ist.

11. Modul nach Anspruch 9 oder 10, **dadurch gekennzeichnet, dass** die Heckklappe eine innere Wand (62), Seitenwände (63) und eine äußere Wand (60) umfasst, wobei die innere Wand und die Seitenwände eine Aussparung (61) bilden, die von der Außenwand verschlossen ist, die in ihrem unteren Abschnitt um eine Achse (4) angelenkt ist, welche einer Gelenkachse der Heckklappe entspricht.

12. Modul nach einem der vorhergehenden Ansprüche, **dadurch gekennzeichnet, dass** die Dachvorrichtung (7) aus einem flexiblen Leinendach (10) besteht, in dem mehrere Stäbchen (11) quer zum Fahrzeug, parallel und bei ausgefahrenem Dach in gleichem Abstand zueinander angeordnet sind, wobei jedes Stäbchen an seinen freien Enden mit einem Schlitten versehen ist, der längs in einem Profil (12) an jedem der Träger (6) und in einer Gleitbahn (13) gleiten kann, die auf beiden Seiten der Kassette (8) angeordnet ist und die Profile (12) in Längsrichtung fortsetzt.

13. Modul nach einem der vorhergehenden Ansprüche, **dadurch gekennzeichnet, dass** die Kassette (8) aus zwei Gleitbahnen (13) besteht, die über zwei Querträger (14, 15) an den Enden der Gleitbahnen (13) miteinander verbunden sind.

14. Kraftfahrzeug mit einem Dachmodul nach einem der vorhergehenden Ansprüche.

15. Fahrzeug nach Anspruch 14, **dadurch gekennzeichnet, dass** die Kassette (8) in einer Aufnahme (50) am Boden des Fahrzeugs im Fach des Kofferraums verstaut werden kann.

16. Fahrzeug nach Anspruch 15, **dadurch gekennzeichnet, dass** ein Boden (50a) des Kofferraums an horizontalen Gleitbahnen montiert ist, sodass die Aufnahme (50) verschlossen werden kann.

17. Fahrzeug nach einem der Ansprüche 14 bis 16, **dadurch gekennzeichnet, dass** jeder Dachträger (6) abnehmbar und an einem seiner freien Enden mit einem Mechanismus zur Befestigung am Aufbau des Fahrzeugs und mit einem Mittel zum Anpassen jedes Trägers an den Aufbau versehen ist.

18. Fahrzeug nach einem der Ansprüche 14 bis 16, **dadurch gekennzeichnet, dass** jeder Träger (6) fest an der Karosserie montiert ist und einen oberhalb gelegenen Abschnitt aufweist, der an einem mittleren Abschnitt des Trägers angelenkt ist, wobei die Träger einen Überrollbügel für den Fall des Umkippens des Fahrzeugs bilden.
